# EUROPEAN PATENT APPLICATION

(11) **EP 4 604 294 A1**
(43) Date of publication of application: **20.08.2025**
(21) Application number: 23883099.6
(22) Date of filing: 25.10.2023
(51) Int. Cl.: H01M 50/264, H01M 50/204

(54) **BATTERY PACK AND ENERGY STORAGE SYSTEM COMPRISING SAME**

(30) Priority: 25.10.2022 KR 20220138105
(71) Applicant: LG Energy Solution, Ltd., Seoul 07335 (KR)
(72) Inventor: OH, Young-Hoo, Daejeon 34122 (KR); KONG, Yu-Dam, Daejeon 34122 (KR); SIM, Chang-Hwi, Daejeon 34122 (KR); OK, Seung-Min, Daejeon 34122 (KR); JO, Sang-Hyun, Daejeon 34122 (KR); CHO, Young-Bum, Daejeon 34122 (KR)
(74) Representative: Plasseraud IP
(86) International application number: PCT/KR2023/016672
(87) International publication number: WO 2024/090994

(57) **Abstract**

A battery pack of the present disclosure includes at least one cell assembly including a plurality of battery cells; an enclosure that accommodates the cell assembly and has an insertion portion provided in a form where an outer surface thereof is recessed in an inward direction along a longitudinal direction; and a rod-shaped reinforcing member inserted into the insertion portion.

## Description

### TECHNICAL FIELD

The present disclosure relates to a battery pack and an energy storage system including the same, and more specifically, to a battery pack with improved enclosure and assembly method between parts, and an energy storage system including the same. The present application claims priority to Korean Patent Application No. 10-2022-0138105 filed on October 25, 2022 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.2 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

An energy storage system (ESS), which has been attracting attention recently, is a device that can maximize power use efficiency by storing generated electricity in a battery pack and supplying it to consumers when electricity is needed. In ESS, a plurality of battery packs form one battery rack, and dozens to hundreds of battery racks are gathered to form one system. It is also used in conjunction with UPS (uninterruptible power supply), which enables stable power supply in response to sudden power supply interruptions or abnormalities, and solar photovoltaic systems, which are power generation devices converting sunlight into electric energy. In addition, as the commercialization of electric vehicles begins in earnest, such an ESS may also be applied to electric charging stations capable of charging electric vehicles.

In the case of a battery pack used in an ESS, it may be configured in a form where a plurality of battery cells are accommodated in an enclosure that can be called a pack case. Here, the enclosure of an ESS battery pack is typically made of a high-strength metal material, usually a steel material, to support the high load of a plurality of battery cells.

However, in this case, the electrical insulation between the enclosure and the electrical components, especially between the enclosure and the battery cell, becomes a problem, and an additional insulation structure or separate insulation parts should be applied between the enclosure and the battery cell to solve this problem. Accordingly, it gives rise to a problem of increasing the manufacturing man-hours, tact time, and manufacturing costs of the battery pack.

Meanwhile, a conventional ESS battery pack has a structure that uses the bolt-nut coupling to fix the internal pack components. In addition, when assembling a terminal block, bolt fastening is used to prevent rotation due to torque and to fix the position of the terminal block.

When using the bolt-nut as in the prior art, structural considerations are needed to implement this, and for example, a design considering avoidance of inserts or under cuts should be carried out. In addition, a design considering insulation weakening that may occur here together should be carried out. And, in terms of process management, the bolt-nut should be continuously checked and managed for torque management for fastening, omission of fastening, and loosening due to product use after fastening. There is also a problem of increasing tact time due to additional processes for fastening and confirmation of fastening.

Therefore, it is required to develop technology for an enclosure structure with improved structural rigidity and safety to firmly support a plurality of battery cells while securing electrical insulation between the enclosure and electrical components. In addition, there is a need to develop technology for battery packs that require fewer design variables to be considered for fixing internal pack components than when using the bolt-nut.

### DISCLOSURE

### Technical Problem

The present disclosure is designed to solve the problems of the related art, and therefore the present disclosure is directed to providing a battery pack with secured electrical insulation and structural safety, and an energy storage system including the same.

The present disclosure is also directed to providing a battery pack that has fewer design variables to be considered for fixing internal pack components than when using the bolt-nut, is easier to manage in terms of process control than when using the bolt-nut, and does not increase tact time, and an energy storage system including the same.

### Technical Solution

A battery pack of the present disclosure for solving the above-described problem includes at least one cell assembly including a plurality of battery cells; an enclosure that accommodates the cell assembly and has an insertion portion provided in a form where an outer surface thereof is recessed in an inward direction along a longitudinal direction; and a rod-shaped reinforcing member inserted into the insertion portion.

The enclosure includes a base plate on which the battery cell is seated; and a support frame portion provided on opposite sides of the base plate and constituting the insertion portion.

The base plate and the support frame portion may be integrally injection molded.

The reinforcing member may be a pair of steel pipes.

The enclosure may be made of a plastic material, and the reinforcing member may be made of a metal material.

The battery pack of the present disclosure may further include a base clip for fixing a position of the reinforcing member.

The at least one cell assembly may be a plurality of cell assemblies disposed side by side with each other, and the cell assembly may include a busbar frame assembly.

The support frame portion of the base plate may be provided in a border area extending in an arrangement direction of the cell assemblies and protrude upward at predetermined intervals along the arrangement direction of the cell assemblies to support the busbar frame assembly of each cell assembly.

The base plate may further include a concave portion provided between the support frame portions adjacent to each other, the busbar frame assembly of each cell assembly may include a busbar frame made of an electrically insulation material, and the busbar frame may include a mounting plate disposed on an upper surface of the support frame portion; and a seating guide block protruding downward from the mounting plate so as to be inserted into a corresponding concave portion.

The mounting plate and the seating guide block may be integrally injection molded into the busbar frame.

The concave portion may include a step on an upper surface thereof, and a lower surface of the seating guide block may have a shape corresponding to the step.

When the cell assembly is seated on the base plate with each of the seating guide blocks inserted into a corresponding concave portion, each of the seating guide blocks and the support frame portions may be configured to form continuous assembly walls along the arrangement direction of the cell assembly, and the assembly walls may define the insertion portion.

The seating guide block and the support frame portion may constrain a position of the reinforcing member in a longitudinaldirection and a height direction of the reinforcing member, and the enclosure and the busbar frame assembly may be fixed to each other by the reinforcing member.

The assembly wall may include an upper receiving wall, a lower receiving wall, and a side receiving wall, and the reinforcing member may be a rectangular parallelepiped steel pipe, wherein the upper part of the steel pipe may be in contact with the upper receiving wall, the lower part of the steel pipe may be in contact with the lower receiving wall, and one side part of the steel pipe may be in contact with the side receiving wall.

The enclosure may further include a front plate on at least one side of the base plate, the battery pack may further include a terminal block, and a front cover having a snap fit structure to prevent the terminal block from being separated may be mounted on the front plate.

The base plate and the front plate may be integrally injection molded.

The front plate may be in a form of a vertical plate provided on one edge of the base plate, the terminal block may be mounted on an outer surface of the front plate, the battery pack may further include a top cover where an opening is formed, and the terminal block may be exposed or shielded using the front cover that is provided to be detachable from the front plate through the opening of the top cover.

And, the present disclosure provides an energy storage system including at least one battery pack according to the present disclosure.

### Advantageous Effects

According to one aspect of the present disclosure, insulation between the enclosure and the battery cell may be secured by manufacturing the enclosure from plastic injection molding, and the mechanical properties of the enclosure may be improved by inserting a reinforcing member into the enclosure to ensure structural stability.

In particular, according to one aspect of the present disclosure, it is possible to provide a battery pack configured such that insulation may be perfectly implemented by applying an injection molded enclosure without separate insulation parts. Accordingly, electrical insulation between the enclosure and the battery cell may be achieved without an additional insulation structure or separate insulation parts, thereby enabling to reduce the manufacturing man-hours, tact time, and manufacturing costs of the battery pack.

In addition, according to one aspect of the present disclosure, the enclosure and the busbar frame assembly are fixed to each other by a reinforcing member to provide a solid fastening configuration, thereby improving resistance to bending or sagging.

Furthermore, the fixing configuration by the reinforcing member may minimize the fixing structure using the bolt-nut. Accordingly, in particular, according to the present disclosure, a structure for assembling and fixing internal parts structurally is proposed by minimizing the fixing structure using the bolt-nut in a battery pack. According to the present disclosure, the design and management control factors of the battery pack may be minimized, thereby suppressing problems that may arise therefrom. That is, it is possible to provide a battery pack that has fewer design variables to be considered for fixing internal pack components than when using the bolt-nut, is easier to manage in terms of process management than when using the bolt-nut, and does not increase tact time.

According to the present disclosure, material costs are lowered as the number of structural simplification parts decreases. According to the present disclosure, productivity is improved due to a reduction in tact time. According to the present disclosure, there is also an effect of reducing the weight of a battery pack through process simplification and structure simplification. According to the present disclosure, due to an injection molded plastic enclosure rather than a steel material, it is not only light in weight, but also does not require resin to implement an injection structure for weighting and fixing bolts and nuts compared to the existing bolt-nut structure, thereby further reducing weight.

As such, according to the present disclosure, the reinforcing member has a significant effect of reinforcing the rigidity of the base plate manufactured by injection, a battery pack configured to stably fix the cell assembly to the base plate and to reduce the weight of the battery pack may be provided.

And, by including such a battery pack, the energy storage system may be safe, be easy to transport and install, and lower production costs.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view of a battery pack according to an embodiment of the present disclosure.
FIG. 2 is a view where a top cover is separated from the battery pack of FIG. 1.
FIG. 3 is a partial exploded perspective view showing main parts of the battery pack of FIG. 1.
FIG. 4 is a perspective view showing a cell assembly of a battery pack according to an embodiment of the present disclosure.
FIG. 5 is a perspective view showing a base plate and a reinforcing member of a battery pack according to an embodiment of the present disclosure.
FIG. 6 is a partial enlarged view of FIG. 5.
FIG. 7 is a view showing the busbar frame of FIG. 4 in more detail.
FIGS. 8 and 9 are views showing the assembly process or assembly structure of a base plate and a plurality of cell assemblies according to an embodiment of the present disclosure.
FIG. 10 is a view showing a state where a base clip is assembled after insertion of the reinforcing member in FIG. 9.
FIG. 11 is a cross-sectional view of the battery pack of FIG. 1.
FIG. 12 is a view showing a terminal block portion in a battery pack according to an embodiment of the present disclosure.
FIG. 13 is a view for describing a terminal block assembly and fixing structure in a battery pack according to the present disclosure.
FIG. 14 corresponds to the cross-section A-A' of FIG. 13 and is a view after assembly of the front cover.
FIG. 15 is a schematic view of an energy storage system according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

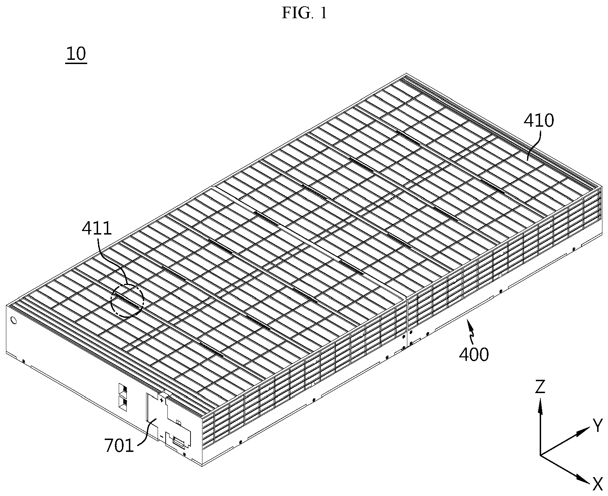

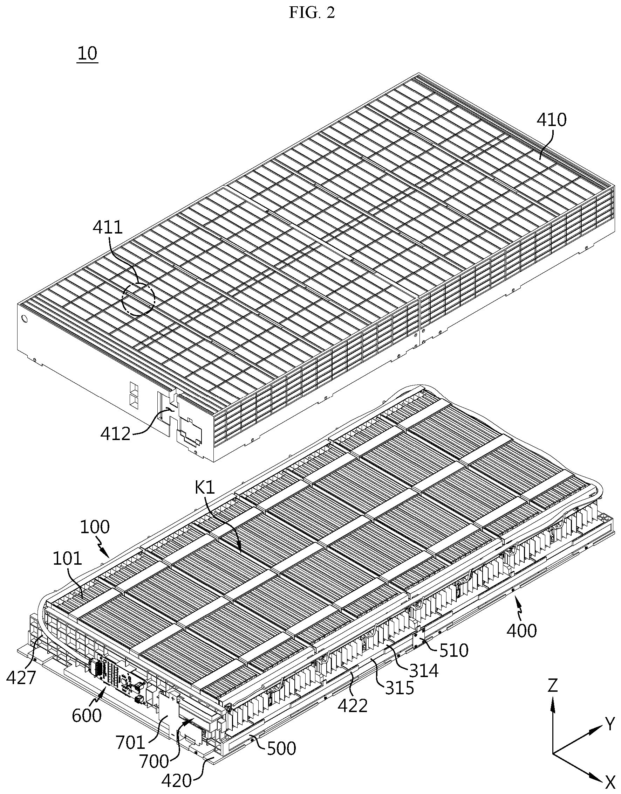

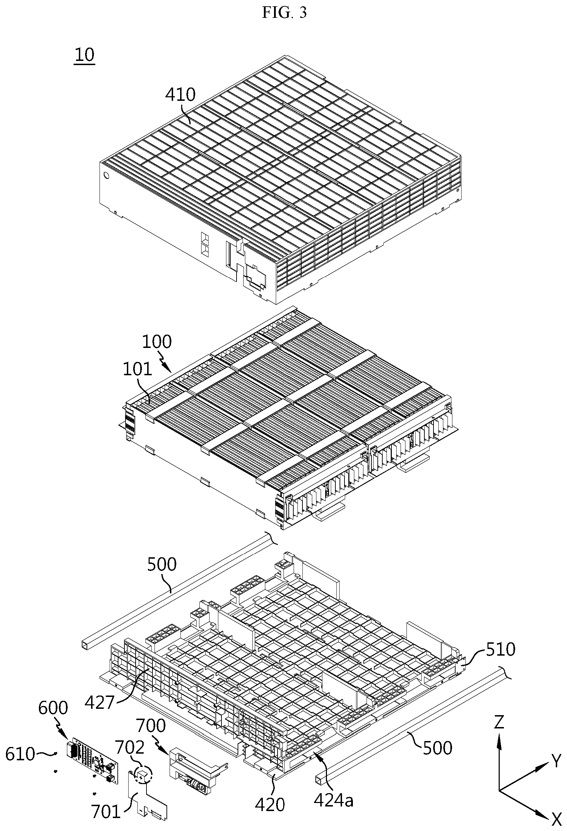

FIG. 1 is a perspective view of a battery pack according to an embodiment of the present disclosure, FIG. 2 is a view where a top cover is separated from the battery pack of FIG. 1, and FIG. 3 is a partial exploded perspective view showing main parts of the battery pack of FIG. 1.

Referring to FIGS. 1 to 3, the battery pack 10 according to the present disclosure may be a three-dimensional structure having a predetermined length, width, and height in the X-axis, Y-axis, and Z-axis directions, respectively. The battery pack 10 includes a cell assembly (CMA) 100, an enclosure 400, and a reinforcing member 500. The battery pack 10 may also further include a base clip and a top cover 410 for fixing a position of the reinforcing member 500.

The battery pack 10 according to the present disclosure includes one or more cell assemblies 100. Here, the cell assembly 100 refers to a plurality of battery cells 101 grouped together.

The battery pack 10 may be configured to include a plurality of cell assemblies 100. For example, as shown in the embodiment of FIG. 2, the battery pack 10 may include four cell assemblies 100 disposed side by side with each other. And, the battery pack 10 includes an enclosure 400 for protecting the four cell assemblies 100 from the outside.

The enclosure 400 is a portion that accommodates the cell assembly 100. When the top cover 410 is coupled to the enclosure 400 as shown in FIG. 1, an empty space in which the cell assembly 100 is accommodated may be formed, and the cell assembly 100 may be accommodated in this empty space.

The enclosure 400 may support the cell assembly 100. In particular, the enclosure 400 may mainly support the lower surface of the cell assembly 100. This enclosure 400 may be mounted on machinery or equipment using the battery pack 10 as an energy source. For example, the enclosure 400 may be mounted on an energy storage system, an electric vehicle, or the like.

In this embodiment, the enclosure 400 may include a base plate 420 that supports the cell assembly 100 at the bottom of the four cell assemblies 100. The base plate 420 supports the cell assembly 100 and constitutes a main part of the enclosure 400. Specifically, the base plate 420 may cover the lower surface of the cell assembly 100.

The top cover 410 mainly covers the upper surface of the cell assembly 100 and is coupled to the base plate 420. The top cover 410 may be provided in a form of a rectangular parallelepiped box with an open bottom, and the base plate 420 may be provided in an approximately plate-shaped form having an area capable of seating a plurality of cell assemblies 100.

In particular, each of the base plate 420 and the top cover 410 may include two unit parts disposed to extend in one direction (Y-axis direction in this embodiment), and each unit part may be connected to each other. FIG. 3 shows parts located on the left of the two unit parts. And, on one side of the unit parts facing each other, fastening protrusions protruding in a direction facing each other and fastening receiving grooves coupled to these fastening protrusions are provided, so that the unit parts may be assembled without steps at the connection portion therebetween. When the size of the enclosure 400 is enlarged to manufacture a large-capacity battery pack, manufacturing it as a single unit may cause manufacturing difficulties or inconveniences during the handling process. According to this embodiment of the present disclosure, since each unit part of the base plate 420 and the top cover 410 may be manufactured in an appropriate size and then assembled in a simple manner to complete the process, there is an advantage of being convenient in the manufacturing and handling process. Furthermore, the structural rigidity of the base plate 420 may be further improved at the connection portion of each unit part, and there is an effect of further improving the resistance to bending or sagging in the thickness direction (Z-axis direction).

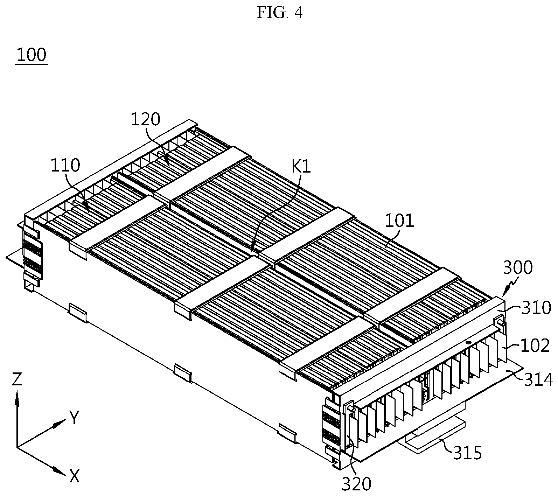

Next, a detailed configuration of the cell assembly 100 will be described with reference to FIG. 4.

FIG. 4 is a perspective view showing a cell assembly of a battery pack according to an embodiment of the present disclosure.

Referring further to FIG. 4, the cell assembly 100 may include a plurality of battery cells 101. The battery cells 101 may be collected by a predetermined number to be configured as one cell assembly 100.

Each cell assembly 100 may include cell stacks 110, 120 including a plurality of battery cells 101. Preferably, the cell stacks 110, 120 are spaced apart by a predetermined distance to have an air layer K1.

The number of battery cells 101 forming the cell stacks 110, 120 may be set in various ways depending on the required output voltage or charge/discharge capacity. One cell assembly 100 may include two cell stacks 110, 120 as shown, or may also be configured to include three or four cell stacks. Of course, it may also be possible to include only one cell stack. Here, the cell stack refers to an assembly of battery cells 101 in which the battery cells 101 having an approximately plate shape are stacked by a predetermined number.

The air layer K1 may serve to block the transfer of heat between the cell stacks 110, 120. For example, when a thermal runaway event occurs in one of the battery cells 101 of the cell stack 120, the air layer K1 may prevent the transfer of heat from the cell stack 120 on one side to the cell stack 110 on the other side. Therefore, when a thermal event occurs in a specific battery cell 101, it is possible to block the chain propagation of heat to all battery cells 101 included in the cell assembly 100. In addition, the air layer K1 may be used as a passage for gas movement when gas is generated in the battery cell 101.

The battery cell 101 may be formed of a pouch-type secondary battery, and may be provided in plurality and electrically connected to each other. For electrical connection, the cell assembly 100 includes a busbar frame assembly 300.

Each battery cell 101 may include an electrode assembly, a battery case accommodating the electrode assembly, and an electrode lead 102 that protrudes out of the battery case and is electrically connected to the electrode assembly. The electrode lead 102 may include a positive electrode lead and a negative electrode lead, wherein the positive electrode lead may be connected to a positive electrode plate of the electrode assembly and the negative electrode lead may be connected to a negative electrode plate of the electrode assembly.

In the illustrated example, each battery cell 101 includes a pair of electrode leads 102 that protrude on both sides thereof in the longitudinal direction (X-axis direction), respectively. In other words, the electrode lead 102 may be provided at the front and rear portions of the battery cell 101, which is a pouch-type secondary battery, along a longitudinal direction, respectively.

In this embodiment, the cell stacks 110, 120 is an assembly of a plurality of battery cells 101 stacked in one direction (Y-axis direction). The battery cells 101 may be arranged side by side in the horizontal direction (Y-axis direction) in a standing state in the vertical direction (Z-axis direction). That is, the battery cells 101 may be provided in a horizontally stacked form with the wide surface thereof standing perpendicular to the ground.

The busbar frame assembly 300 is disposed at the front and rear of the cell stacks 110, 120, respectively, which are spaced apart from each other at a predetermined distance in the left-right direction (Y-axis direction) and disposed side by side with each other. In other words, the busbar frame assembly 300 is disposed at the front and rear of the cell stacks 110, 120 in a direction crossing the stacking direction of the battery cells 101.

The busbar frame assembly 300 may be provided to correspond to the number of cell stacks. That is, the busbar frame assembly 300 in this embodiment is designed to correspond to two cell stacks 110, 120, but for example, if the number of cell stacks is three, the busbar frame assembly 300 may also be configured to support and electrically connect the three cell stacks.

The busbar frame assembly 300 includes a busbar frame 310 and a plurality of busbars 320.

The busbar frame 310 is made of an electrically insulation material and may be provided in a size that integrally covers the front or rear surfaces of the cell stacks 110, 120. In addition, the busbar frame 310 may have lead slits, each of which may allow a predetermined number of electrode leads 102 to pass in the front-rear direction (X-axis direction). The lead slits may be provided at predetermined intervals along the stacking direction of the battery cells 101.

The plurality of busbars 320 may be provided in a form of a rod or plate made of a metal material such as copper, aluminum, or nickel having electrical conductivity. The plurality of busbars 320 may be mounted on the busbar frame 310 to be spaced apart from each other at regular intervals along the stacking direction of the battery cells 101.

In the battery cells 101 constituting the cell stacks 110, 120, respectively, their electrode leads 102 may be withdrawn outward from the busbar frame 310 through the corresponding lead slits. The electrode lead 102 withdrawn to the outside of the busbar frame 310 may be bent and fixedly attached to the surface of the corresponding busbar 320. For example, the busbar 320 and the electrode lead 102 may be fixedly coupled to each other by laser welding or ultrasonic welding. For example, the positive electrode leads of two battery cells 101 are overlapped and attached to a specific busbar 320, and the negative electrode leads of two other battery cells 101 are overlapped and attached to the specific busbar 320. Then, the four battery cells 101 may be connected to each other in series and/or in parallel. By attaching the electrode lead 102 of the battery cell 101 to the corresponding busbar 320 in this manner, all of the battery cells 101 included in the cell stacks 110, 120 may be connected in series and/or in parallel.

The busbar frame 310 may achieve electrical insulation. Since the busbar frame 310 may be manufactured as a plastic structure through injection, there is no need for separate insulation treatment or insulation parts for electrical insulation. It also helps to reduce weight.

And, it is preferably configured as an injection molded structure for implementing a mating part with the base plate 420. In the battery pack 10 according to this embodiment, the busbar frame 310 of the busbar frame assembly 300 may further include a mounting plate 314 seated on the upper surface of the support frame portion 422 of the base plate 420 and a seating guide block 315 protruding downward from the mounting plate 314. The mounting plate 314 and the seating guide block 315 are components for improving assemblability and fixability between the plurality of cell assemblies 100 and the base plate 420. The mounting plate 314 and the seating guide block 315 may be integrally injection molded into the busbar frame 310. The mounting plate 314 and the seating guide block 315 will be described in more detail below in connection with the base plate 420.

Referring to FIGS. 1 to 3 again, the enclosure 400 may be made of a plastic material. The enclosure 400 may be entirely made of a plastic material. In particular, the enclosure 400 may be configured in a form of a plastic injection molded product. In this way, when the enclosure 400 is manufactured from plastic injection molding, insulation with the battery cell 101 may be secured.

A plurality of cell assemblies 100 may be seated and supported on the base plate 420. In the illustrated example, four cell assemblies 100 with electrode leads 102 protruding in both directions of the X-axis are arranged side by side along the Y-axis direction, and the busbar frame assemblies 300 connecting the electrode leads 102 in the cell assembly 100 are placed on opposite sides of the base plate 420. If the cell assembly with an electrode lead protruding in one direction of the X-axis is included, the busbar frame assembly may be placed on one side of the base plate.

In particular, the base plate 420 may achieve electrical insulation and is preferably configured as an injection molded structure for implementing a mating part with the cell assembly 100. Since the base plate 420 may be manufactured as a plastic structure through injection, there is no need for separate insulation treatment or insulation parts for electrical insulation. In addition, it can be made lighter than the case where the enclosure is made of a metal material.

The base plate of a conventional battery pack enclosure is manufactured by extrusion or applied with a rigid material such as a steel plate. Here, additional insulation parts should be applied for insulation, thereby causing a problem that the weight and cost increase. Since the battery pack 10 according to the present disclosure uses an injection molded enclosure, there is no need to apply additional insulation parts. Therefore, it is possible to reduce the weight and cost.

However, when applied as a plastic injection molded product, the structural safety of the enclosure 400 may be problematic. Moreover, as the size of the enclosure 400 becomes larger, compared to the conventional enclosure made of steel, the enclosure 400 structure made from plastic injection molding may be more prone to bending or sagging and may be weaker in strength or rigidity, thereby being a limit to the solid support force.

Accordingly, in this embodiment, a reinforcing member 500 is provided in the enclosure 400. That is, the structural rigidity of the injection molded enclosure is supplemented by a reinforcing member 500, which may be a steel pipe for mechanical structure. The reinforcing member 500 may sufficiently supplement the desired rigidity with a smaller volume and weight compared to the base plate of a steel material of a conventional battery pack enclosure. Therefore, the battery pack 10 according to the present disclosure may reduce the weight and cost compared to the conventional battery pack.

The enclosure 400 has an insertion portion 424a provided in a form where an outer surface thereof is recessed in an inward direction along a longitudinal direction. In particular, the insertion portion 424a may be provided on opposite sides of the base plate 420 of the enclosure 400, and the base plate 420 includes the support frame portion 422 so as to configure the insertion portion 424a. The base plate 420 and the support frame portion 422 may be integrally injection molded. As the enclosure 400 is manufactured from a plastic injection molding in this way, in addition to the advantage of securing insulation with the battery cell 101, convenience in processing may also be secured, and the manufacturing man-hours may be reduced. As such, by manufacturing the enclosure 400 from plastic injection molding, electrical insulation is possible without an additional insulation structure or separate insulation parts, thereby enabling to reduce the tact time and manufacturing costs of the battery pack 10.

The reinforcing member 500 may be inserted into the enclosure 400. The reinforcing member 500 may be inserted into the insertion portion 424a of the enclosure 400. In particular, the reinforcing member 500 may be configured as a rod extending long in one direction to be inserted into the insertion portion 424a. The insertion portion 424a may be provided on opposite sides of the enclosure 400. Therefore, the reinforcing member 500 may be inserted from a side portion of the battery pack 10. Since the insertion portion 424a is provided in a form where an outer surface thereof is recessed in an inward direction from the enclosure 400, the reinforcement member 500 may be easily inserted into the insertion portion 424a by a simple operation of sliding the reinforcement member 500 from the outer surface of the enclosure 400 inward, that is, in the side direction.

The reinforcing member 500 may be made of a metal material. For example, the reinforcing member 500 may be a pair of steel pipes. In addition, as shown in FIG. 3, the reinforcing member 500 may be a rectangular parallelepiped steel pipe with a rectangular cross-section. In addition, the reinforcing member 500 may be provided in a form of a hollow pipe as shown. In this case, the weight may be further reduced.

Such a reinforcing member 500 may be disposed to be inserted in a pair into the insertion portion 424a of the enclosure 400. Through this, both side portions of the enclosure 400 may be firmly supported. In this way, even though the enclosure 400 is manufactured from a plastic injection molding, the mechanical properties of the enclosure 400 may be improved by the reinforcing member 500 to ensure structural stability. Compared to the case where the cell assembly 100 is supported only by the base plate 420, the entire coupling structure may support the load of the cell assembly 100 through the reinforcing member 500, thereby ensuring structural safety.

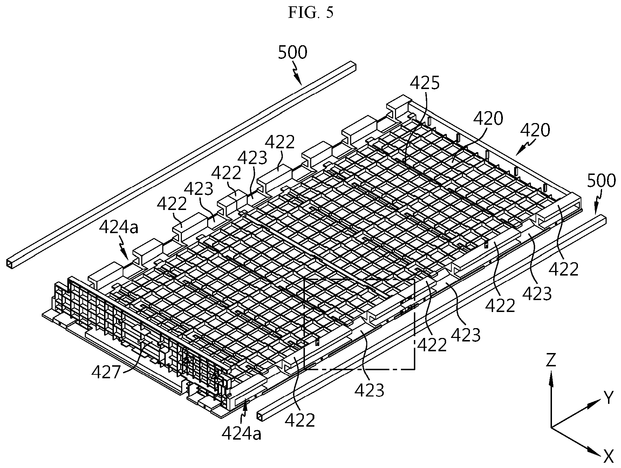

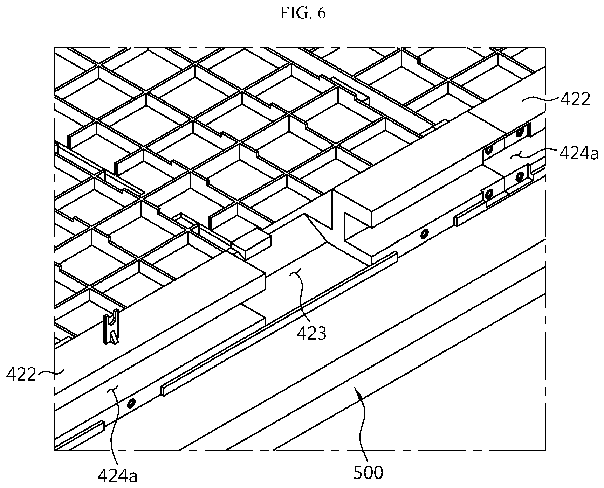

FIG. 5 is a perspective view showing a base plate and a reinforcing member of a battery pack according to an embodiment of the present disclosure, and FIG. 6 is a partial enlarged view of FIG. 5.

First, as shown in FIG. 5, the base plate 420 may have a lower venting hole 425 formed therethrough. And, as shown in FIGS. 1 and 2, the top cover 410 may have an upper venting hole 411 formed therethrough. The upper venting hole 411 and the lower venting hole 425 may be formed to have a vertically symmetrical structure. And, the upper venting hole 411, the air layer K1 shown in FIGS. 2 and 3, and the lower venting hole 425 may all be configured to be matched in the vertical direction. The gas emitted from the battery cell 101 may be discharged to the outside of the battery pack 10 through the upper venting hole 411 and/or the lower venting hole 425 via the air layer K1. In this way, the high-temperature and high-pressure gas generated from the battery cells 101 may be uniformly distributed and discharged to the outside of the enclosure 400. Accordingly, collapse or deformation of the battery pack 10 may be prevented when gas is emitted from the battery cells 101.

Meanwhile, as shown in FIGS. 5 and 6, the support frame portion 422 of the base plate 420 is provided in the border area extending in an arrangement direction of the cell assembly 100, and protrudes upward at predetermined intervals along the arrangement direction of the cell assembly 100. And, the base plate 420 may further include a concave portion 423 provided between neighboring support frame portions 422. Here, the arrangement direction of the cell assembly 100 is the same as the stacking direction of the battery cells 101, and the border area extending in an arrangement direction of the cell assembly 100 includes border areas in both directions of the X-axis in the base plate 420 of FIG. 5.

In addition, the support frame portion 422 has a shape in which the outer surface thereof is recessed in an inward direction, so that it may form the insertion portion 424a. The recessed shape is provided in an approximately ' 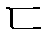 ' shape, and this shape may be shape-matched with the reinforcing member 500. On the other hand, the recessed shape may not necessarily be a ' 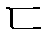 ' shape as long as it is a shape that matches the reinforcing member 500. The concave portion 423 may be located between two adjacent support frame portions 422, as shown in FIG. 6.

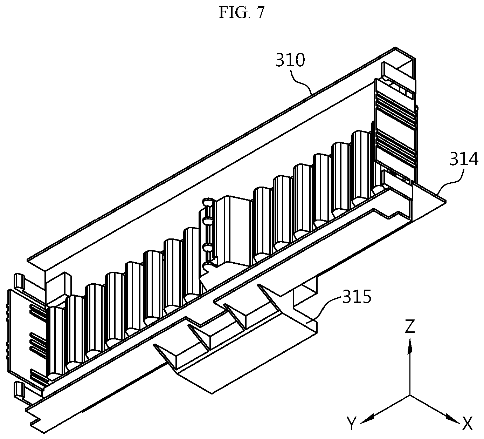

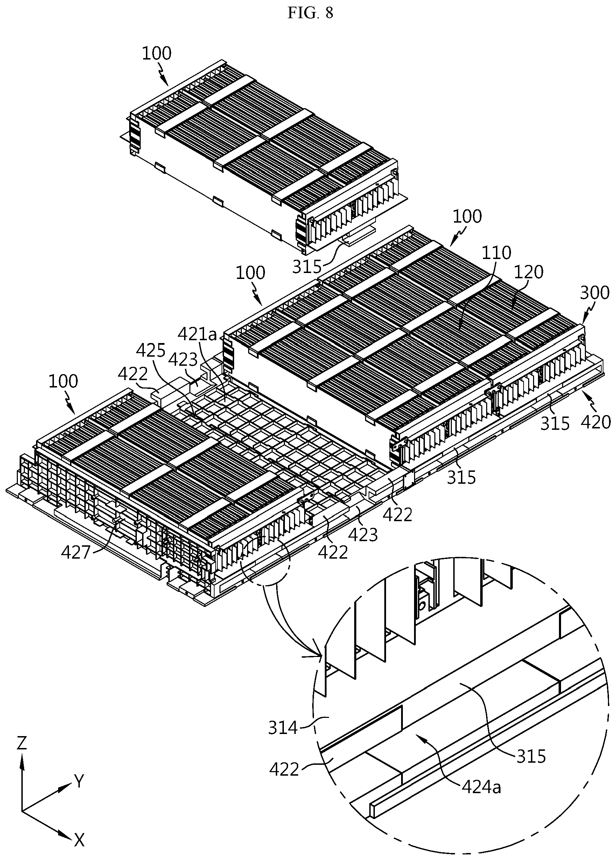

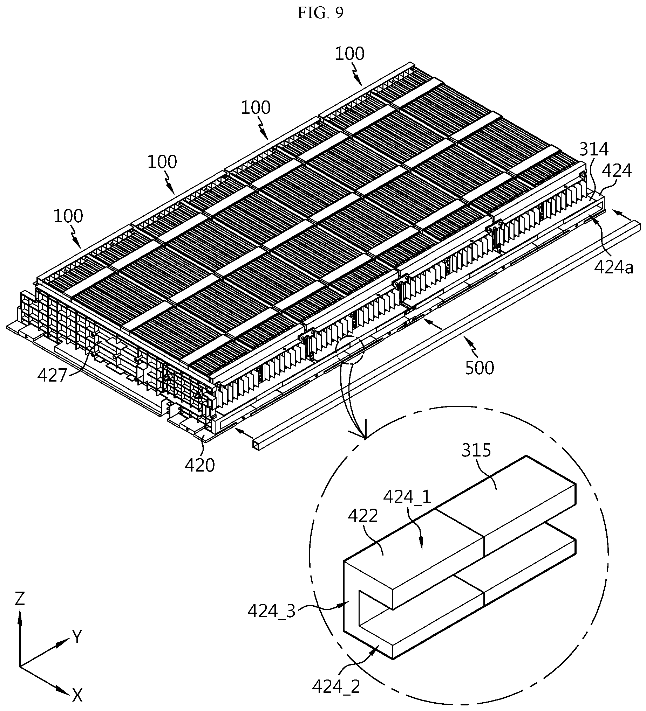

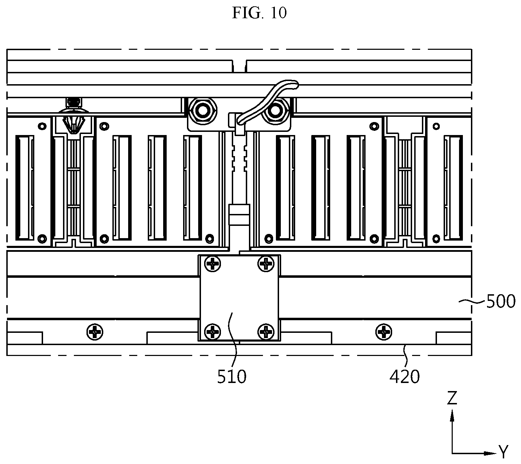

FIG. 7 is a view showing the busbar frame of FIG. 4 in more detail. FIGS. 8 and 9 are views showing the assembly process or assembly structure of a base plate and a plurality of cell assemblies according to an embodiment of the present disclosure. FIG. 10 is a view showing a state where a base clip is assembled after insertion of the reinforcing member in FIG. 9.

The concave portion 423 may be configured to fit the shape of the seating guide block 315 of the busbar frame 310, as shown in FIGS. 7 and 8. In particular, the concave portion 423 includes a step on its upper surface, and the lower surface of the seating guide block 315 may have a shape corresponding to the step. The step may implement a position guide, and it may be configured to particularly include an inclined portion to facilitate the position guide and assembly of the seating guide block 315 in the concave portion 423. Accordingly, the cell assembly 100 may be stably mounted and accommodated on the base plate 420.

Next, with further reference to FIGS. 8 to 10, the assembly structure and fixing structure between the base plate 420 and the plurality of cell assemblies 100 will be described.

Each cell assembly 100 includes a busbar frame assembly 300 having a seating guide block 315, and the base plate 420 has concave portions 423 at predetermined positions. The number of seating guide blocks 315 provided in the cell assembly 100 and the number of concave portions 423 provided in the base plate 420 are the same.

A support frame portion 422 is protruding around the concave portion 423. The seating guide block 315 may be inserted into the concave portion 423 while passing between neighboring support frame portions 422 from top to bottom, that is, in the Z-axis direction. And, the concave portion 423 may be configured in the border area of the base plate 420 such that the cell assemblies 100 are disposed to be spaced apart from each other at a predetermined distance on the base plate 420 when the seating guide block 315 of each cell assembly 100 is inserted into each corresponding concave portion 423. In addition, the busbar frame 310 of each cell assembly 100 has a mounting plate 314 that may be disposed to face the upper surface of the support frame portion 422, as also shown in FIGS. 3 and 7.

The battery pack 10 according to the present disclosure includes the above-described configuration, and when each cell assembly 100 is assembled to the base plate 420 so that the seating guide block 315 and the concave portion 423 fit into each other, each of the plurality of cell assemblies 100 may be easily placed in position with respect to the base plate 420, as shown in FIG. 8.

**In** addition, each cell assembly 100 may be fixed in the Y-axis direction with respect to the base plate 420 in FIG. 8 because the seating guide block 315 is inserted to fit into the concave portion 423 between the two support frame portions 422. In other words, since the seating guide block 315 of the busbar frame 310 is inserted into the concave portion 423 of the base plate 420, and the support frame portion 422 is protruding around the concave portion 423 so as to be constrained to the left and right (Y-axis direction) of the concave portion 423, movement in the Y-axis direction is restricted once each cell assembly 100 is seated on the base plate 420.

Referring to FIG. 9, when each seating guide block 315 is inserted into each corresponding concave portion 423 to be seated on the base plate 420, the cell assembly 100 may be configured such that each of the seating guide block 315 and the support frame portion 422 form a continuous assembly wall 424 along the arrangement direction of the cell assembly 100. That is, the seating guide block 315 and the support frame portion 422 may be disposed so that a predetermined internal space communicates with not only each other but also other neighboring seating guide blocks 315 and support frame portions 422, and the reinforcing member 500 may be inserted and disposed within such a space.

Since the assembly wall 424 may be provided in a form where an outer surface thereof is recessed in an inward direction, it defines the insertion portion 424a of the enclosure 400. As shown in FIG. 9, the reinforcing member 500 may be inserted into the insertion portion 424a from the side.

The reinforcing member 500 may be provided in a rod shape having a length corresponding to the length of the assembly wall 424. This reinforcing member 500 may be applied substantially equally to both border areas of the base plate 420.

More specifically, the assembly wall 424 includes an upper receiving wall 424_1, a lower receiving wall 424_2, and a side receiving wall 424_3, and the reinforcing member 500 is a rectangular parallelepiped steel pipe. The upper part of the reinforcing member 500 may be in contact with the upper receiving wall 424_1, the lower part of the reinforcing member 500 may be in contact with the lower receiving wall 424_2, and one side part of the reinforcing member 500 may be in contact with the side receiving wall 424_3.

The upper receiving wall 424_1 by the support frame portion 422 of the base plate 420 and the upper receiving wall 424_1 by the seating guide block 315 of the busbar frame 310 are formed side by side and have no step. The lower receiving wall 424_2 by the support frame portion 422 and the lower receiving wall 424_2 by the seating guide block 315 are also formed side by side and have no step. The side receiving wall 424_3 by the support frame portion 422 and the side receiving wall 424_3 by the seating guide block 315 are also formed side by side and have no step. Therefore, the internal space by the assembly wall 424 communicates with each other in the X-axis, Y-axis, and Z-axis directions to define the insertion portion 424a of the integrated space, and accordingly, the reinforcing member 500 may be stably inserted into the insertion portion 424a. Furthermore, after being inserted into the insertion portion 424a, the position of the reinforcing member 500 is constrained in the X-axis, Y-axis, and Z-axis directions.

Meanwhile, a base clip 510 may be mounted on the base plate 420 as shown in FIG. 10 to prevent the reinforcing member 500 from easily slipping out of the insertion portion 424a. For example, after the reinforcing member 500 is inserted into the insertion portion 424a, the base clip 510 may be coupled to the support frame portion 422 of the base plate 420. The base clip 510 is for fixing the reinforcing member 500 to the base plate 420 and may be a bracket structure made of steel.

According to this embodiment, all of the cell assemblies 100 may be fixed to the base plate 420 in the X-axis, Y-axis, and Z-axis directions. That is, each cell assembly 100 is sandwiched between the support frame portions 422 (both border areas) of the base plate 420, and thus its movement in the X-axis direction is restricted. Since the support frame portion 422 and the seating guide block 315 are fixed by the reinforcing member 500, movement of the seating guide block 315 in the Y-axis direction and the Z-axis direction is restricted. Afterwards, the top cover 410 may be further assembled to secondarily prevent movement of the reinforcing member 500, thereby completing the battery pack 10.

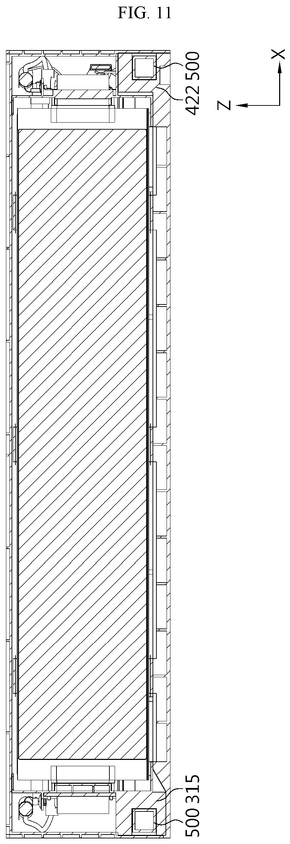

FIG. 11 is a cross-sectional view of the battery pack of FIG. 1. A cross-section perpendicular to the Y-axis direction is shown.

As shown in FIG. 11, the reinforcing member 500 is inserted into the inner side of the seating guide block 315 of each cell assembly 100, thereby restricting movement in the X-axis direction and the Z-axis direction. And, as described above, the seating guide block 315 of each cell assembly 100 is inserted into the concave portion 423, thereby restricting movement in the Y-axis direction. In this way, the seating guide block 315 and the support frame portion 422 also constrain a position of the reinforcing member 500 in a longitudinaldirection and a height direction of the reinforcing member 500.

In addition, since the reinforcing member 500 is inserted through the support frame portion 422 of the base plate 420 and the seating guide block 315 of the busbar frame 310 of the cell assembly 100, the reinforcing member 500 may fix the base plate 420 and the cell assembly 100. That is, the enclosure 400 and the busbar frame assembly 300 may be fixed to each other by the reinforcing member 500. As such, it can be confirmed that the reinforcing member 500, the base plate 420, and the busbar frame 310 may be constrained in the X-axis direction and the Z-axis direction without bolts and nuts.

In this way, the base plate 420 and the busbar frame 310 may be manufactured into a plastic structure through injection, and the base plate 420 and the busbar frame 310, which are divided into two parts, are assembled and fixed to each other by insertion of the reinforcing member 500 and side fixing. The base plate 420 and the busbar frame 310 may be coupled without bolts and nuts, and structural safety may be enhanced.

In terms of process management, the bolt-nut should be continuously checked and managed for torque management for fastening, omission of fastening, and loosening due to product use after fastening. There is also a problem of increasing tact time due to additional processes for fastening and confirmation of fastening. According to the present disclosure, since the use of the bolt-nut may be minimized, it is easy to manage in terms of process management, and the tact time does not increase.

Meanwhile, referring to FIGS. 2 and 3, the enclosure 400 further includes a front plate 427 on at least one side of the base plate 420, the battery pack 10 further includes a terminal block 700, and a front cover 701 having a snap fit 702 structure that prevents the terminal block 700 from being separated may be mounted on the front plate 427. The front cover 701 is provided to be detachable from the front plate 427.

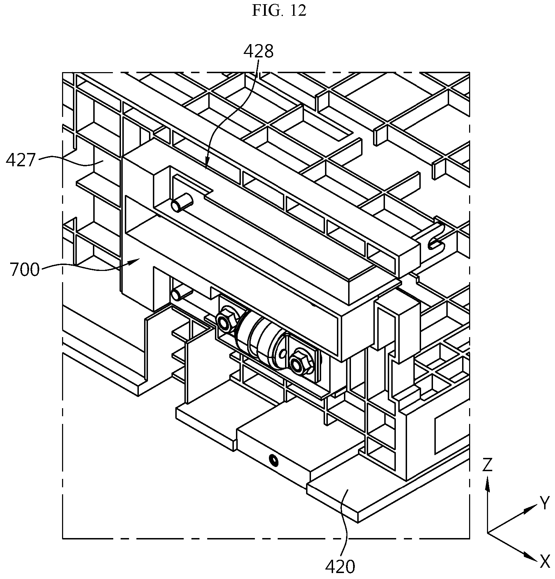

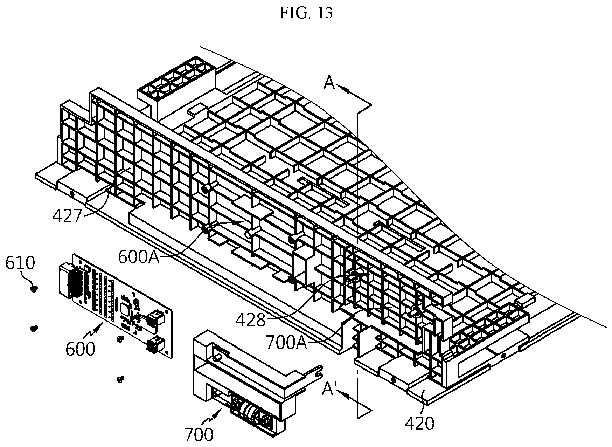

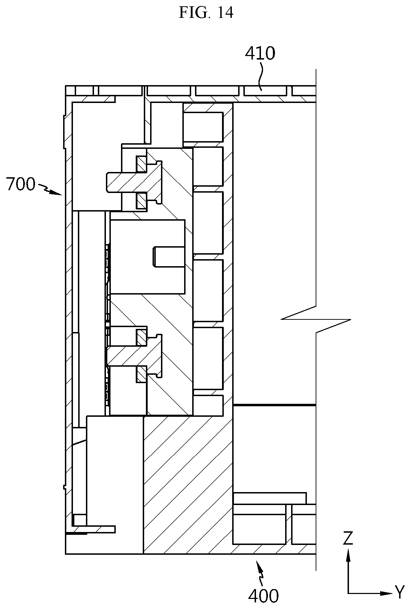

FIG. 12 is a view showing a terminal block portion in a battery pack according to an embodiment of the present disclosure. FIG. 13 is a view for describing a terminal block assembly and fixing structure in a battery pack according to the present disclosure. FIG. 14 corresponds to the cross-section A-A' of FIG. 13 and is a view after assembly of the front cover.

Referring to FIG. 2 and FIGS. 12 to 14 together, the base plate 420 and the front plate 427 may be integrally injection molded.

The front plate 427 is in a form of a vertical plate provided on one edge of the base plate 420 and may be an electrical component installation portion. For example, the terminal block 700 may be mounted on an outer surface of the front plate 427, and a BMS assembly 600 may also be mounted thereon. Here, the BMS assembly 600 may be configured to measure the current and temperature of the battery cell 101 within the battery pack 10 and control charge/discharge of the battery cell 101. The terminal block 700 may include electrode terminals of the battery pack 10, a fuse, and the like. In order to mount the BMS assembly 600 and the terminal block 700, a BMS mounting portion 600A and a terminal block mounting portion 700A may be provided on an outer surface of the front plate 427. In particular, the terminal block mounting portion 700A may be configured to include a step portion 428.

Top cover 410 may include an opening 412. The terminal block 700 may be exposed or shielded using a front cover 701 that is provided to be detachable from the front plate 427 through the opening 412 of the top cover 410.

Referring to FIG. 12, the terminal block 700 may be mounted on the step portion 428 of the front plate 427. Conventionally, when assembling a terminal block, bolt fastening has been used to prevent rotation due to torque and to fix the position of the terminal block. In the present disclosure, rotation of the terminal block 700 may be prevented through a structural step, and the front cover 701 of the terminal block 700 may be fixedly positioned on the front plate 427 through the snap fit 702 structure.

A stepped wall at the step portion 428 provides a position guide during assembly and prevents rotation after assembly. The snap fit 702 structure prevents the terminal block 700 from being separated after assembly.

Conventionally, when assembling a terminal block, bolt fastening has been used to prevent rotation due to torque and to fix the position of the terminal block. According to this embodiment of the present disclosure, the step portion 428 is used, thereby minimizing the use of the bolt-nut.

Meanwhile, the BMS assembly 600 may also be mounted on the front plate 427 through an insert nut 610. The front plate 427 may be provided by considering during plastic injection that the BMS assembly 600 can be mounted on the BMS mounting portion 600A through the insert nut 610 without the need for a separate BMS housing.

In this way, the front plate 427 may be manufactured through injection molding of the BMS mounting portion 600A and the terminal block mounting portion 700A as a single piece. The plastic injection provides a satisfactory insulation and has the effect of reduction in weight and cost. In addition, there is no need for the bolt-nut fastening to fix the position of the terminal block 700.

In terms of process management, the bolt-nut should be continuously checked and managed for torque management for fastening, omission of fastening, and loosening due to product use after fastening. There is also a problem of increasing tact time due to additional processes for fastening and confirmation of fastening. According to the present disclosure, by minimizing the fixing structure using the bolt-nut in the battery pack 10, a structure for assembling and fixing internal parts structurally is proposed.

According to the present disclosure, the design and management control factors of the battery pack 10 may be minimized, thereby suppressing problems that may arise therefrom. That is, it is possible to provide the battery pack 10 that has fewer design variables to be considered for fixing internal pack components than when using the bolt-nut, is easier to manage in terms of process management than when using the bolt-nut, and does not increase tact time. According to the present disclosure, material costs are lowered as the number of structural simplification parts decreases. According to the present disclosure, productivity is improved due to a reduction in tact time.

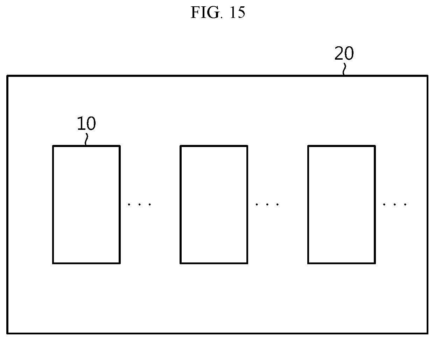

FIG. 15 is a schematic view of an energy storage system according to the present disclosure.

The energy storage system 20 may include one or more battery packs 10 according to the present disclosure described above. In particular, the energy storage system 20 may include a plurality of battery packs 10 according to the present disclosure in a form where they are electrically connected to each other in order to have a large energy capacity. In addition, the energy storage system 20 according to the present disclosure may further include various other components of energy storage systems known at the time of filing the present disclosure. Moreover, this energy storage system 20 may be used in various places or devices, such as a smart grid system or an electric charging station.

For example, the energy storage system 20 may include a plurality of battery racks including the battery pack 10 according to the present disclosure. The battery pack 10 may be configured to be accommodated in a rack case (not shown) in a vertically arranged form. Inside the rack case, a plurality of battery packs 10 may be mounted while being spaced apart from each other in the vertical direction. The rack case may have a receiving space having an open structure for communication between the plurality of battery packs 10 in the vertical direction. The battery rack may include a rack battery management system (BMS) at the top of the plurality of battery packs 10. Here, the rack BMS may be a battery management system that centrally controls charge/discharge of the plurality of battery packs 10 provided in the battery rack. And, these plurality of battery racks may be electrically connected to each other through a rack busbar (not shown).

The energy storage system 20 according to the present disclosure includes the battery pack 10 according to the present disclosure, so that the advantage of the battery pack 10 may be utilized as it is. Since the electrical insulation and structural safety of the battery pack 10 are secured, the energy storage system 20 including the same is safe. The structural safety of the battery pack 10 is secured and the weight is reduced, thereby facilitating transportation and installation of the battery pack 10. Since the material cost of the battery pack 10 is reduced and productivity is improved, the production cost of the energy storage system 20 including the same may also be lowered.

The terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

**[Explanation of Reference Signs]**

| | | | |
|---|---|---|---|
| 10: | battery pack | 20: | energy storage system |
| 100: | cell assembly | 101: | battery cell |
| 102: | electrode lead | 100, 120: | cell stack |
| K1: | air layer | 300: | busbar frame assembly |
| 310: | busbar frame | 314: | mounting plate |
| 315: | guide block | 320: | busbar |
| 400: | enclosure | 410: | top cover |
| 412: | opening | 420: | base plate |
| 422: | support frame portion | 423: | concave portion |
| 424: | assembly wall | 424a: | receiving portion |
| 427: | front plate | 428: | step portion |
| 500: | reinforcing member | 510: | base clip |
| 700: | terminal block | 701: | front cover |
| 702: | snap fit | | |

## Claims

1. A battery pack, comprising:
at least one cell assembly comprising a plurality of battery cells;
an enclosure that accommodates the cell assembly and has an insertion portion provided in a form where an outer surface thereof is recessed in an inward direction along a longitudinal direction; and
a rod-shaped reinforcing member inserted into the insertion portion.

2. The battery pack according to claim 1,
wherein the enclosure comprises:
a base plate on which the battery cell is seated; and
a support frame portion provided on opposite sides of the base plate and constituting the insertion portion.

3. The battery pack according to claim 2,
wherein the base plate and the support frame portion are integrally injection molded.

4. The battery pack according to claim 1,
wherein the reinforcing member includes a pair of steel pipes.

5. The battery pack according to claim 1,
wherein the enclosure is made of a plastic material, and
the reinforcing member is made of a metal material.

6. The battery pack according to claim 1, further comprising
a base clip for fixing a position of the reinforcing member.

7. The battery pack according to claim 2,
wherein the at least one cell assembly is a plurality of cell assemblies disposed side by side with each other,
the cell assembly comprises a busbar frame assembly, and
the support frame portion of the base plate is provided in a border area extending in an arrangement direction of the cell assemblies and protrudes upward at predetermined intervals along the arrangement direction of the cell assemblies to support the busbar frame assembly of each cell assembly.

8. The battery pack according to claim 7,
wherein the base plate further comprises a concave portion provided between the support frame portions adjacent to each other,
the busbar frame assembly of each cell assembly comprises a busbar frame made of an electrically insulation material, and
the busbar frame comprises:
a mounting plate disposed on an upper surface of the support frame portion; and
a seating guide block protruding downward from the mounting plate so as to be inserted into a corresponding concave portion.

9. The battery pack according to claim 8,
wherein the mounting plate and the seating guide block are integrally injection molded into the busbar frame.

10. The battery pack according to claim 8,
wherein the concave portion comprises a step on an upper surface thereof, and a lower surface of the seating guide block has a shape corresponding to the step.

11. The battery pack according to claim 8,
wherein when the cell assembly is seated on the base plate with each of the seating guide blocks inserted into a corresponding concave portion, each of the seating guide blocks and the support frame portions are configured to form continuous assembly walls along the arrangement direction of the cell assembly, and the assembly walls define the insertion portion.

12. The battery pack according to claim 11,
wherein the seating guide block and the support frame portion constrain a position of the reinforcing member in a longitudinaldirection and a height direction of the reinforcing member, and the enclosure and the busbar frame assembly are fixed to each other by the reinforcing member.

13. The battery pack according to claim 11,
wherein the assembly wall comprises an upper receiving wall, a lower receiving wall, and a side receiving wall, and
the reinforcing member is a rectangular parallelepiped steel pipe,
wherein the upper part of the steel pipe is in contact with the upper receiving wall, the lower part of the steel pipe is in contact with the lower receiving wall, and one side part of the steel pipe is in contact with the side receiving wall.

14. The battery pack according to claim 2,
wherein the enclosure further comprises a front plate on at least one side of the base plate,
the battery pack further comprises a terminal block, and
a front cover having a snap fit structure to prevent the terminal block from being separated is mounted on the front plate.

15. The battery pack according to claim 14,
wherein the base plate and the front plate are integrally injection molded.

16. The battery pack according to claim 14,
wherein the front plate is in a form of a vertical plate provided on one edge of the base plate,
the terminal block is mounted on an outer surface of the front plate,
the battery pack further comprises a top cover where an opening is formed, and
the terminal block is exposed or shielded using the front cover that is provided to be detachable from the front plate through the opening of the top cover.

17. An energy storage system comprising at least one battery pack according to any one of claims 1 to 16.
